# FASCICULE DE BREVET EUROPEEN

(11) **EP 2 623 681 B1**
(45) Date de publication et mention de la délivrance du brevet: **19.08.2015**
(21) Numéro de dépôt: 13153395.2
(22) Date de dépôt: 31.01.2013
(51) Int. Cl.: E04B 1/84, B32B 5/26, G10K 11/168, A47H 23/08, B32B 5/02, B32B 7/02, D06M 11/83, E04B 1/76

(54) **Isolant phonique**
Schallschutz
Sound Insulation

(30) Priorité: 02.02.2012 FR 1250968
(43) Date de publication de la demande: 07.08.2013
(73) Titulaire: Brunswick Et Fils, 75002 Paris (FR)
(72) Inventeur: Brunswick, Jean-Claude, 33000 BORDEAUX (FR)
(74) Mandataire: Monlouis, Patrick

(56) Documents cités:
- WO-A1-2006/029294
- WO-A2-2011/016015
- DE-A1-102006 019 669
- FR-A1- 2 572 272
- FR-A1- 2 726 886
- US-A- 3 231 042
- US-A1- 2004 231 915
- NAZIRE DENIZ YILMAZ ET AL: "Effects of porosity, fiber size, and layering sequence on sound absorption performance of needle-punched nonwovens", JOURNAL OF APPLIED POLYMER SCIENCE, vol. 121, no. 5, 31 mars 2011 (2011-03-31) , pages 3056-3069, XP055014629, ISSN: 0021-8995, DOI: 10.1002/app.33312
- Meier A., Müller K.: "Schallreflektierende und schallabsorbierende Stoffe für raumakustische Anwendungen" In: "DAGA 2010", 2010, Berlin, XP009162746, pages 931-932, * le document en entier *

## Description

La présente invention est relative à un dispositif isolant phonique.

Dans un contexte d'amélioration de la qualité de vie, la préservation de l'habitat vis-à-vis des nuisances sonores est un enjeu important.

Les ouvertures d'un bâtiment vers l'extérieur sont très souvent mal isolées phoniquement alors même que les surfaces vitrées tendent à augmenter dans le but d'améliorer l'apport en lumière naturelle. Les solutions existantes utilisent des tissus qui ne permettent qu'une performance limitée en termes d'isolation phonique ou utilisent des films métalliques générateurs de bruits de froissements très déplaisants.

L'invention a donc pour but de fournir un dispositif isolant phonique qui soit performant en termes d'isolation phonique mais qui ne génère pas de bruits parasites dégradant le niveau de confort du bâtiment, tout en ayant une esthétique agréable permettant une intégration harmonieuse au sein du bâtiment.

Un dispositif isolant phonique selon l'invention, est caractérisé en ce qu'il comporte au moins trois couches :
- une première couche, faisant face à une source sonore à occulter, comprenant un tissu occultant d'un poids supérieur à 250 g/m²,
- une seconde couche comportant un tissu métallisé, une face métallisée du tissu étant disposée au contact de la première couche,
- une troisième couche comportant un tissu coton gratté d'un poids supérieur à 250 g/m², disposée au contact de la seconde couche à l'opposé de la première couche,
le tissu métallisé étant réalisé par métallisation sous vide d'un substrat tissé préalablement calandré par l'application d'un effort de compression.

Avantageusement, le substrat tissé comporte des fils d'un poids maximal de 78 dtex (70 deniers) avec un minimum de 30 filaments par fil.

L'utilisation de brins fins permet d'augmenter la brillance du substrat et d'ainsi augmenter la brillance du tissu métallisé. De manière préférée, on utilise un fil d'un poids de 56 dtex (50 deniers) comportant 36 filaments.

Les essais réalisés par l'inventeur ont montré que l'utilisation d'un substrat tissé appelé communément tissu était essentielle pour atteindre les objectifs de souplesse recherchés.

Dans le cas de l'utilisation de l'isolant phonique selon l'invention en tant que rideau, la souplesse du tissu a un impact important sur le tombé du rideau réalisé et sur son aspect esthétique.

Le tissu utilisé pour la troisième couche peut comporter du coton gratté.

Il est nécessaire d'utiliser des matériaux de poids élevé de manière à maximiser les propriétés d'isolation phonique. De préférence la première couche comprend un tissu occultant d'un poids supérieur à 260 g/m².

La troisième couche peut également comprendre un tissu occultant d'un poids supérieur à 260 g/m².

De manière préférée, le substrat tissé utilisé, appelé également tissu, est à base de fibres synthétiques.

Le substrat tissé peut être à base de microfibres, c'est-à-dire de fibres présentant plus de 100 filaments par décitex ou de brins fins, c'est-à-dire de fibres proches de 100 filaments par décitex.

L'utilisation de fibres synthétiques permet de disposer d'un matériau pouvant fondre au moins partiellement, sans brûler. L'utilisation de microfibres ou de brins fins permet de conserver la souplesse du tissu.

Le tissage des fils est dense et très serré. De manière préférée le substrat tissé comprend au moins 42 fils de chaîne et 40 fils de trame par pouce. De manière plus préférée le substrat tissé comprend 44 fils de chaîne et 41 fils de trame par pouce.

Le tissu utilisé pour la seconde couche est préalablement lavé avant son calandrage, précédant le dépôt d'une couche métallique. Cette opération est également appelée désencollage. En effet, selon les techniques habituelles de fabrication de tissus, un dépôt de colle est appliqué sur les fils avant leur tissage. Il convient, notamment pour conserver la souplesse du produit, de supprimer cette colle.

De manière à obtenir un désencollage optimal, il est possible de réaliser deux passes de désencollage, en utilisant par exemple de la soude lors de l'une des deux passes.

Le calandrage s'effectue en une ou plusieurs passes successives sur une ou les deux faces du substrat lors desquelles un effort de compression est appliqué à chaud sur le tissu.

Une passe à 15m/minutes sur chaque face à une température de 195°C et un effort de 80 tonnes permet d'obtenir l'effet recherché.

L'objectif est d'évacuer une partie de l'air présent dans le tissu. On constate qu'une pression sous vide 2.3 10-3 atm (valeur supérieure 24.10-2 atm) est nécessaire pour permettre la réalisation de la phase métallisation. La contexture, c'est-à-dire l'ensemble des propriétés du tissu, et les traitements réalisés sur le tissu permettent de rester au dessous de cette valeur.

La phase de métallisation s'effectue sous vide à 400 m/minutes, notamment, par dépôt de métal en phase vapeur. Le métal déposé peut être par exemple de l'aluminium ou de l'argent.

D'autres caractéristiques et avantages de l'invention apparaîtront dans la description qui suit d'un mode de réalisation préféré avec référence au dessin annexé mais qui n'a aucun caractère limitatif. Sur ce dessin :

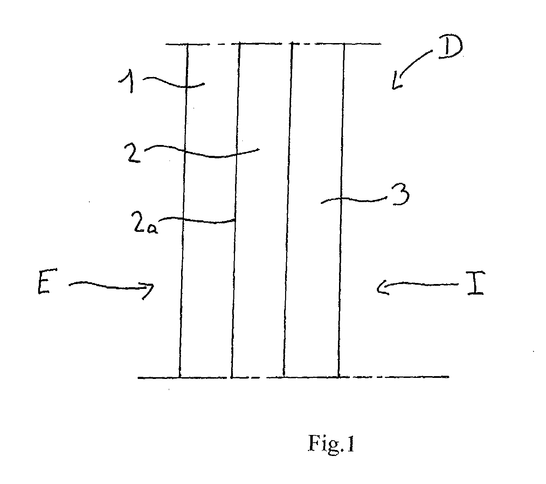

Fig. 1 est une vue schématique en coupe partielle d'un dispositif selon l'invention.

On peut voir Fig. 1 un dispositif D selon l'invention comportant une première couche 1 faisant face à une zone extérieure E d'où proviennent des sons à étouffer.

La première couche 1 est contigüe à une seconde couche 2 ou couche interne, composée d'un tissu comportant une couche métallique 2a sur la face en contact avec la première couche 1.

Enfin une troisième couche 3 est disposée au contact de la seconde face de la seconde couche 2, à l'opposé de la première couche 1.

Des tests ont été menés démontrant que l'isolant selon l'invention peut permettre une atténuation des bruits extérieurs pouvant aller jusqu'à 7 dB, soit une réduction des trois quarts.

L'isolant selon l'invention est donc particulièrement adapté à la réalisation de rideaux placés devant les fenêtres ou les portes fenêtres, à l'intérieur des habitations.

## Revendications

1. Dispositif (D) isolant phonique, **caractérisé en ce qu'**il comporte au moins trois couches :
- une première couche (1), faisant face à une source sonore à occulter, comprenant un tissu occultant d'un poids supérieur à 250 g/m²,
- une seconde couche (2) comportant un tissu métallisé, une face métallisée (2a) du tissu étant disposée au contact de la première couche,
- une troisième couche (3) comportant un tissu coton gratté d'un poids supérieur à 250 g/m², disposée au contact de la seconde couche (2) à l'opposé de la première couche (1),
le tissu métallisé étant réalisé par métallisation sous vide d'un substrat tissé préalablement calandré par l'application d'un effort de compression.

2. Dispositif isolant phonique suivant la revendication 1, **caractérisé en ce que** tissu métallisé comporte des fils d'un poids maximal de 70 deniers avec un minimum de 30 filaments par fil.

3. Dispositif isolant phonique suivant la revendication1 ou 2, **caractérisé en ce que** le tissu utilisé pour la troisième couche (3) comporte du coton gratté.

4. Dispositif isolant phonique suivant l'une quelconque des revendications précédentes, **caractérisé en ce que** la première couche (1) comprend un tissu occultant d'un poids supérieur à 260 g/m².

5. Dispositif isolant phonique suivant l'une quelconque des revendications précédentes, **caractérisé en ce que** la troisième couche (3) comprend un tissu occultant d'un poids supérieur à 260 g/m².

## Patentansprüche

1. Schallisolierende Vorrichtung (D), **dadurch gekennzeichnet, dass** sie mindestens aus drei Lagen besteht:
- einer ersten Lage (1), gegenüber einer zu dämmenden Schallquelle, bestehend aus einem dämmenden Gewebe mit einem Gewicht über 250 g/m²,
- einer zweiten Lage (2), bestehend aus einem Metallgewebe, wobei eine metallisierte Seite (2a) des Gewebes in Kontakt mit der ersten Lage angeordnet ist,
- einer dritten Lage (3) bestehend aus einem dämmenden Gewebe mit einem Gewicht über 250 g/m², in Kontakt mit der zweiten Lage (2), und gegenüber der ersten Lage (1) angeordnet,
wobei das Metallgewebe hergestellt wird durch Aufdampfen im Vakuum eines gewebten Substrats zuvor kalandriert durch Anwendung einer Druckspannung.

2. Schallisolierende Vorrichtung nach Anspruch 1, **dadurch gekennzeichnet, dass** das metallisierte Gewebe Fäden enthält mit einem maximalen Gewicht von 70 Deniers mit mindestens 30 Filamenten pro Faden.

3. Schallisolierende Vorrichtung nach Anspruch 1 oder 2, **dadurch gekennzeichnet, dass** das für die dritte Lage (3) benutzte Gewebe gerauhte Baumwolle enthält.

4. Schallisolierende Vorrichtung nach einem der vorhergehenden Ansprüche, **dadurch gekennzeichnet, dass** die erste Lage (1) ein dämmendes Gewebe enthält mit einem Gewicht von mehr als 260 g/m².

5. Schallisolierende Vorrichtung nach einem der vorhergehenden Ansprüche, **dadurch gekennzeichnet, dass** die dritte Lage (3) ein dämmendes Gewebe enthält mit einem Gewicht von mehr 260 g/m².

## Claims

1. A sound insulation device (D), which includes at least three layers:
- a first layer (1), facing a sound source to be blocked, comprising a blackout cloth with a weight greater than 250 g/m²,
- a second layer (2) including a metalized cloth, a metalized face (2a) of the cloth being disposed in contact with the first layer,
a third layer (3) including a blackout cloth having a weight greater than 250 g/m², disposed in contact with the second layer (2) on the side opposite the first layer (1),
the metalized cloth being produced by in vacuo metallization of a woven substrate previously calendered by the application of a compression force.

2. The sound insulation device as claimed in claim 1, wherein the metalized cloth includes threads with a maximum weight of 70 deniers with a minimum of 30 filaments per thread.

3. The sound insulation device as claimed in claim 1 or 2, wherein the cloth used for the third layer (3) includes brushed cotton.

4. The sound insulation device as claimed in any one of the preceding claims, wherein the first layer (1) comprises a blackout cloth having a weight greater than 260 g/m².

5. The sound insulation device as claimed in any one of the preceding claims, wherein the third layer (3) comprises a blackout cloth having a weight greater than 260 g/m².
